# EUROPEAN PATENT SPECIFICATION

(11) **EP 1 160 558 B1**
(45) Date of publication and mention of the grant of the patent: **19.07.2006**
(21) Application number: 01202023.6
(22) Date of filing: 29.05.2001
(51) Int. Cl.: G01M 3/14, G01M 3/28

(54) **Method for examining the closeness of a seal in a concrete structure**
Verfahren zur Prüfung der Dichtigkeit einer Dichtung in einer Betonstruktur
Procédé d'essai de l'étanchéité d'un joint dans une structure en béton

(30) Priority: 30.05.2000 NL 1015342
(43) Date of publication of application: 05.12.2001
(73) Proprietor: De Zeven Son B.V., 5691 RH Son en Breugel (NL)
(72) Inventor: Belgers, Johannes Antonius Wouter, 5691 RH Son en Beugel (NL); Saris, Coen Franciscus Martinus, 5691 CK Son en Beugel (NL)
(74) Representative: Verhees, Godefridus Josephus Maria

(56) References cited:
- EP-A- 0 836 088
- EP-A- 0 933 628
- PATENT ABSTRACTS OF JAPAN vol. 017, no. 385 (M-1448), 20 July 1993 (1993-07-20) & JP 05 069490 A (MITSUBOSHI BELTING LTD), 23 March 1993 (1993-03-23)

## Description

### BACKGROUND OF THE INVENTION:

### Field of the invention

The invention relates to a method for investigating whether a seal leaks in a joint the bottom of which is gastight in a concrete floor or wall slab or between two adjacent concrete floor or wall slabs, and which seal is situated at a distance from the bottom of the joint, and where gas is blown into the joint under the seal and whether gas penetrates through the seal is investigated by observing soap bubbles forming on the upper surface of the seal. By a joint is also meant a pattern of joints which are interconnected with each other. The joints may be executed as grooves closed at the bottom which have been placed in floor or wall slabs in order to define beforehand the place where a crack will appear when overloaded. The joints may also be situated between two adjacent slabs and extend through the slab's full thickness, where the bottom of the joint is sealed, for example, by building plastic or bentonite or a soil impermeable to gas such as loam. The joints are sealed at the top, for example, by a sealant or a rubber profile. This sealant should be gastight in order to satisfy all kinds of requirements, for example, preventing the floor or wall slab from leaking when there is a crack in the bottom of the joint.

### Prior art

A method for investigating whether a seal leaks in a joint in a concrete floor which is closed at the bottom is known from EP-A-0 836 088.

In this known method the floor has to be provided with a perforated hose along the entire joint to be tested.

### Summary of the invention

An objective of the invention is to provide a method of the type described in the preamble of claim 1 in which a test for determining leakage under whatever circumstances is completely reliable. The method for this according to the invention is characterized in that the blowing of gas under the seal takes place by sticking a hollow needle through the seal or by sticking a hollow needle or hose from a side at one end of the joint between the bottom of the joint and the seal and blowing gas through the hollow needle or the hose into the joint, whereby the gas pressure is built up in the joint and constantly maintained at a desired value by measuring the gas pressure in the joint and regulating the volume flow of the gas supplied. Because the gas in the joint escapes at the open ends, gas should be pumped continuously into the joint in order to keep the gas pressure constant. By doing this in a controlled manner, it has been found that an equal and constant gas pressure can be maintained everywhere in the interconnected joints.

It is noted from the Japanese patent application JP-A 5069490 that a method is known for testing whether two sheets of building plastic leak where they are joined. In this method, a hollow needle is stuck through one of the sheets of plastic to a channel in the seam. Gas is then blown into the channel and the seam is soaped. Whether there is a leak can be checked by observing the formation of soap bubbles. This known method concerns testing whether there is a leak where two flexible materials are joined and does not provide any insight into the problems involved in testing joints in a concrete floor.

The joints at the edges of a floor or wall are often open. Because of this it had been believed that the gas pressure necessary for carrying out the investigation could not be built up simply in all the interconnected joints.

Surprisingly enough, however, it has turned out that with the method according to the invention in actual practice it has proved possible in a simple way to apply a gas pressure and maintain it in all the interconnected joints.

It is noted from European patent application number EP 0 933 628 A1 that a method is known in which a hollow needle is stuck through a seal in a joint between two floor slabs and air is pumped under the floor slabs. This method, however, is concerned with investigating whether a floor itself leaks. If there are joints in the floor, which are gastight at the bottom, the air will not be able to come from under the floor into these joints which are closed at the bottom, as a result of which these joints cannot be tested using this known method.

In order to check whether there is an obstruction in the joint and the joint is tested along its full length, an embodiment of the method according to the invention is characterized in that the gas pressure is measured at an end of the joint. If the pressure at an end is nil, then one will know that there is an obstruction in the joint between the point where the gas is pumped in and this end, as a result of which the joint will not be investigated along its full length and gas can be pumped into the joint at other places.

### Brief description of the drawings

The invention will be elucidated more fully below on the basis of drawings in which embodiments of the method and the device according to the invention are shown. In these drawings:
Figure 1 is a view from above of a floor provided with joints to which testing apparatus is connected for carrying out the method according to the invention;
Figure 2 is a cross-section of an embodiment of the floor shown in Figure 1 with a joint in the form of a slit which is closed at the bottom in a floor slab;
Figure 3 is a cross-section of another embodiment of the floor shown in Figure 1 with a joint closed at the bottom by a sheet of building plastic in the form of a continuous slit between two adjacent floor slabs;
Figure 4 is a longitudinal section of the device; and
Figure 5 is a partially cutaway view of the device.

### Detailed description of the drawings

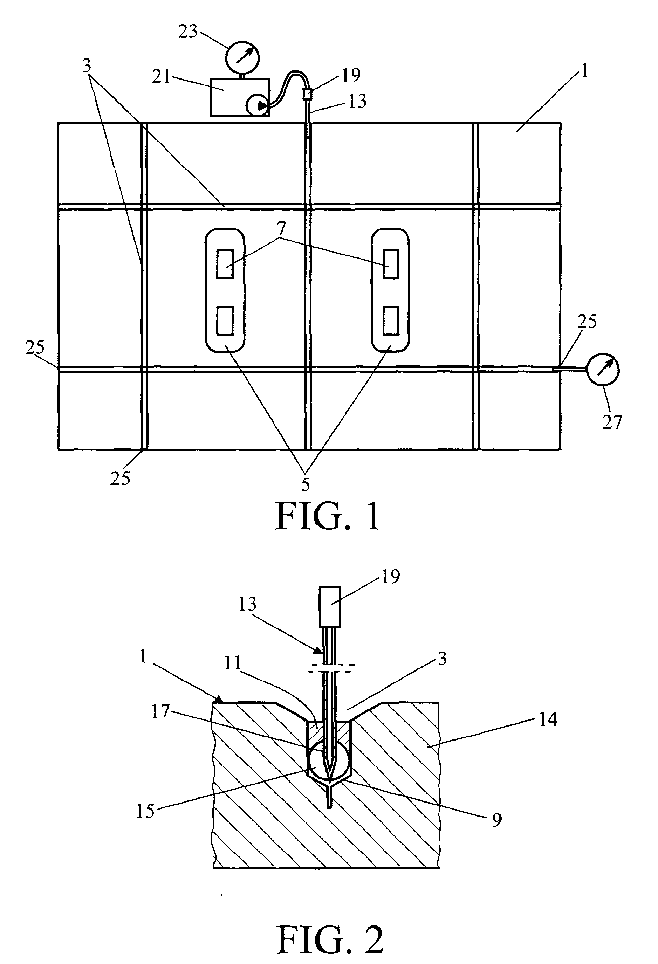

In Figure 1 an industrial floor 1, for example, a filling station, provided with joints 3 is shown in a view from above. There are pump islands 5 with fuel pumps 7 on the floor 1. The joints 3 are closed at the bottom 9 and at the top closed off by a seal 11, for example, a sealant (see Figure 2).

To test whether the seal 11 leaks, a gas, for example air, is pumped into the joint 3 between the seal 11 and the bottom 9 of the joint 3. In the set-up shown in Figure 1, a hollow device 13 for supplying gas is stuck into the space between the seal 11 and the bottom 9 of the joint 3 at an edge of the floor 1.The upper surface of the seal 11 has been soaped and where the seal 11 leaks, soap bubbles will form.

In Figure 2, a cross-section of an embodiment of the floor 1 shown in Figure 1 is displayed with a joint 3 in the form of a slit which is closed at the bottom 9 in a floor slab 14. Instead of sticking the device 13 into the joint 3 at the edge of the floor 1, the device 13 is stuck through the seal 11 from above. There is a porous filling material 15 in the joint 3 in order to prevent the whole joint from being filled when applying the sealant, which is unfavourable for the quality of the seal. The device 13 is provided with openings 17 near one end for the flow of gas. At the other end the device 13 is provided with a means for coupling 19 to a pumping unit 21 (see Figure 1). After the test has been carried out, the device 13 is pulled out of the seal 11. The hole in the seal can be closed with a plug, for example, or the sealing material can be self-sealing.

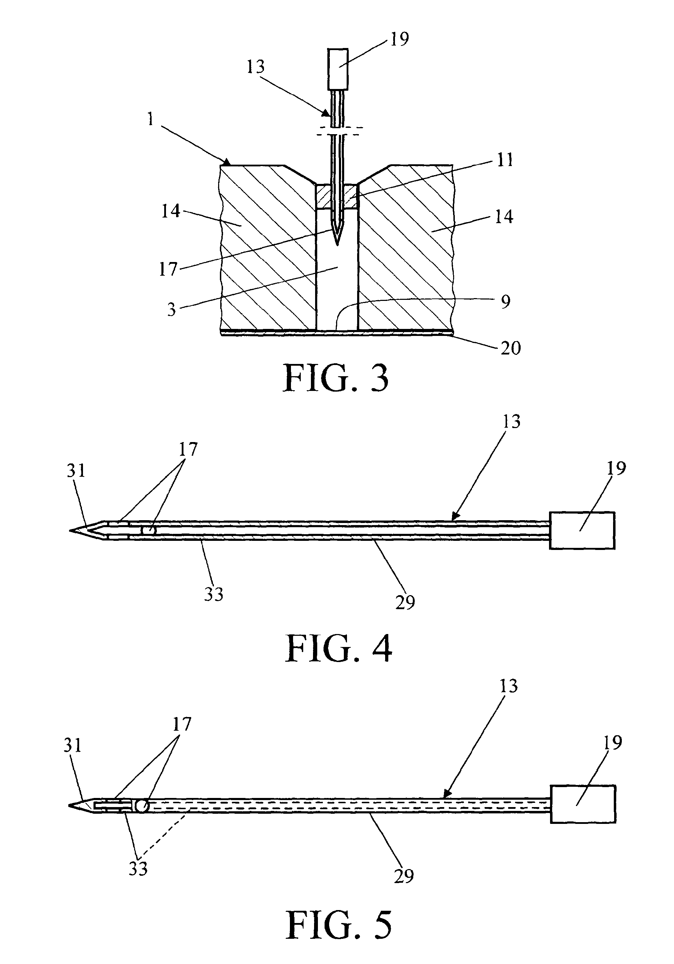

In Figure 3 a cross-section of another embodiment of the floor in Figure 1 is shown. In the floor 1 there is a joint 3 in the form of a continuous slit between two adjacent floor slabs 14, which is closed at the bottom by building plastic 20.

With the aid of a pumping unit 21, see Figure 1, gas pressure is built up in the joints 3 and constantly maintained at a desired value. For this purpose, the gas pressure in the joint is measured with a pressure gauge 23 and gas is pumped into the joint in a controlled manner. In order to check whether there are obstructions in the joints 3, the gas pressure is measured at the open ends 25 of the joints 3 with an additional pressure gauge 27. If the gas pressure at an open end is the same as the air pressure outside the joints, then this means that there is an obstruction in the joint between the point where the gas is pumped in and the measuring point. By subsequently sticking the device through the seal at a distance from the open end and pumping gas into the joint, this part of the joint can also be tested.

In Figures 4 and 5 the device 13 is shown in a longitudinal section and a partially cutaway view respectively. The device 13 comprises a hollow rod 29 which is provided with a coupling piece 19 for connecting to a gas hose at one end. The other end is closed and has a sharp point 31. There are four openings 17 in the side wall 33 of the hollow rod 29 near the closed end. The openings 17 are distributed over the circumference of the hollow rod 29 and have been made by drilling twice through the rod 29 so that in each case there are two openings 17 opposite each other which are in alignment.

Although in the above the invention is explained on the basis of the drawings, it should be noted that the invention is in no way limited to the embodiments shown in the drawings. The invention also extends to all embodiments deviating from the embodiments shown in the drawings within the context defined by the claims. The joints may also be in a wall slab instead of the floor slab shown here. Instead of the expansion joints shown the joints may also be drainage channels, for example. The joints' seal may also be a rubber profile instead of a sealant.

## Claims

1. Method for investigating whether a seal (11) leaks in a joint (3) the bottom (9) of which is gastight in a concrete floor (1) or wall slab or between two adjacent concrete floor or wall slabs (14), and which seal (11) is situated at a distance from the bottom (9) of the joint (3), and where gas is blown into the joint under the seal and whether gas penetrates through the seal (11) is investigated, by observing soap bubbles forming on the upper surface of the seal, **characterized in that** the blowing of gas under the seal (11) takes place by sticking a hollow needle (13) through the seal or by sticking a hollow needle or hose from a side at one end of the joint (3) between the bottom (9) of the joint and the seal (11) and blowing gas through the hollow needle (13) or the hose into the joint, whereby the gas pressure is built up in the ioint and constantly maintained at a desired value by measuring the gas pressure in the joint and regulating the volume flow of the gas supplied.

2. Method according to claim 1, **characterized in that** at one end (25) of the joint (3), the gas pressure is measured in order to check whether there is an obstruction in the joint.

## Patentansprüche

1. Arbeitsverfahren zur Prüfung der Dichtigkeit einer Abdichtung (11) in einer an einer Unterseite (9) gasdichten Fuge (3) in einer Boden- oder Wandplatte aus Beton (1) oder zwischen zwei nebeneinander befindlichen Boden- oder Wandplatten aus Beton (14), wobei die Abdichtung (11) im Abstand zur Unterseite (9) der Fuge (3) angeordnet ist und in die Fuge unterhalb der Abdichtung Gas hineingeblasen und durch Beobachtung von an der Oberseite der Abdichtung sich bildenden Seifenblasen geprüft wird, ob Gas durch die Dichtung (11) dringt, **dadurch** gekennzeicnnet, dass das Einblasen von Gas unterhalb der Abdichtung (11) erfolgt, indem die Abdichtung mit einer Hohlnadel (13) durchstochen wird oder indem auf einer Seite der Fuge (3) seitlich eine Hohlnadel oder ein Schlauch in den Bereich zwischen der Unterseite (9) der Fuge und der Abdichtung (11) eingeführt und über die Hohlnadel (13) oder den Schlauch Gas in die Fuge geblasen wird, wobei in der Fuge ein Gasdruck aufgebaut und auf einem gewünschten Wert konstant gehalten wird, indem der Gasdruck in der Fuge gemessen und der Volumenstrom des zuzuführenden Gases geregelt wird.

2. Arbeitsverfahren nach Anspruch 1, **dadurch gekennzeichnet, dass** an einem Ende (25) der Fuge (3) der Gasdruck gemessen wird, um zu kontrollieren, ob im Bereich des Fugenquerschnitts eine Verstopfung vorhanden ist.

## Revendications

1. Procédé permettant d'analyser l'étanchéité d'un joint d'étanchéité (11) dans une jointure dont la partie inférieure (9) est étanche au gaz (3) dans un sol en béton ou plaque murale (1) ou entre deux sols en béton ou plaques murales adjacent(e)s (14), lequel joint d'étanchéité (11) est présent à distance de la partie inférieure (9) de la jointure (3), du gaz étant insufflé dans la jointure sous le joint d'étanchéité et étant analysée une éventuelle pénétration de gaz au travers du joint d'étanchéité (11) par perception de bulles de savon se formant sur la partie supérieure du joint d'étanchéité, la caractéristique étant que l'insufflation de gaz sous le joint d'étanchéité (11) est effectuée en piquant une aiguille creuse (13) dans le joint d'étanchéité ou, à une extrémité de la jointure (3) à partir de la face latérale, en piquant une aiguille creuse ou un tuyau entre la partie inférieure (9) de la jointure et le joint d'étanchéité (11) et en insufflant, via l'aiguille creuse (13) ou le tuyau, du gaz dans la jointure, une pression de gaz étant créée et maintenue, de manière constante à une valeur souhaitée en mesurant la pression de gaz dans la jointure et en réglant le débit-volume de gaz à ajouter.

2. Procédé selon la conclusion 1, **caractérisé en ce que** la pression de gaz est mesurée, à l'extrémité (25) de la jointure (3), afin de contrôler si la section de la jointure n'est pas bouchée.
